# EUROPÄISCHE PATENTSCHRIFT

(11) **EP 1 488 084 B1**
(45) Veröffentlichungstag und Bekanntmachung des Hinweises auf die Patenterteilung: **31.05.2006**
(21) Anmeldenummer: 03702550.9
(22) Anmeldetag: 29.01.2003
(51) Int. Cl.: F02B 37/22, F02B 37/24, F01D 17/16, F04D 29/46, F04D 27/02, F02M 25/07, F02D 41/00

(54) **VARIABLER ABGASTURBOLADER**
VARIABLE EXHAUST GAS TURBOCHARGER
TURBOCOMPRESSEUR A GAZ D'ECHAPPEMENT A GEOMETRIE VARIABLE

(30) Priorität: 28.03.2002 DE 10213897
(43) Veröffentlichungstag der Anmeldung: 22.12.2004
(73) Patentinhaber: Daimler Chrysler AG, 70567 Stuttgart (DE)
(72) Erfinder: ERDMANN, Wolfgang, 70439 Stuttgart (DE); FLEDERSBACHER, Peter, 70619 Stuttgart (DE); STUTE, Manfred, 73730 Esslingen (DE); SUMSER, Siegfried, 70327 Stuttgart (DE)
(74) Vertreter: Schrauf, Matthias
(86) Internationale Anmeldenummer: PCT/EP2003/000862
(87) Internationale Veröffentlichungsnummer: WO 2003/083275

(56) Entgegenhaltungen:
- DE-A- 10 007 669
- US-A- 3 639 075
- US-A- 4 484 857

## Beschreibung

Die Erfindung bezieht sich auf einen variablen Abgasturbolader für eine Brennkraftmaschine. Der Abgasturbolader weist innerhalb eines Gehäuses eine Abgasturbine und einen Verdichter auf. Das Verdichterrad ist über eine Welle mit einem Abgasturbinenrad verbundenen. Der Verdichter weist eine variable Drall- bzw. Drosseleinrichtung auf.

Es ist bereits ein variabler Abgasturbolader aus der DE 199 55 508 C1 bekannt. Es wird eine Brennkraftmaschine mit einem Abgasturbolader beschrieben, der eine Abgasturbine und einen Verdichter zur Erzeugung komprimierter Ladeluft umfasst. Zusätzlich weist die Brennkraftmaschine eine luftgetriebene Turbine auf, die mit dem Verdichter drehverbunden ist und der über ein stellbares Sperrorgan Verbrennungsluft zuführbar ist. Der Turbinenauslaß ist über einen Verbindungskanal mit dem Ansaugtrakt stromab des Verdichters verbunden. Die Brennkraftmaschine weist eine Regel- und Steuereinheit zur Erzeugung von das Sperrorgan einstellenden Steuersignalen auf.

Es ist ein stromauf des Verdichters vom Ansaugtrakt abzweigender Zusatzkanal zum Lufteinlaß der luftgetriebenen Turbine vorgesehen. Über das Sperrorgan ist die Luftzufuhr in den Zusatzkanal und in den Verdichtereinlaß einstellbar. Im niederen Lastbereich ist für den Fall, daß der Soll-Ladedruck einen Schwellenwert unterschreitet, in der Regel- und Steuereinheit ein Stellsignal erzeugbar, über welches das Sperrorgan in eine den Zusatzkanal öffnende und die Luftzufuhr zum Verdichtereinlaß reduzierende Position verstellbar ist.

Ferner ist aus der DE 100 07 669 A1 ein variablen Abgasturbolader bekannt, der Vorleitschaufeln vor dem Verdichterrad aufweist, mit Hilfe derer ein Gegen- oder Mitdrall zur Regelung der Drehzahl des variablen Abgasturbolader erzeugbar ist.

Variable Abgasturbolader-Turbinen finden derzeit in Größen von Dieselmotoren mit kleinen Hubvoluminas bis zu größeren, mittelschnell laufenden Nutzfahrzeug-Dieselmotoren ihren Einsatz.

Seit langem sind die Möglichkeiten des Einsatzes variabler Vorleitgitter als Dralleinrichtung vor dem Verdichterrad wie auch variabel beschaufelter Diffusoren hinter dem Verdichterrad an den weit verbreiteten Mixflow-Verdichtern bekannt. Die Mixflow-Verdichter weisen im Eintritt eine axiale Strömung und im Austritt eine radiale Strömung auf. Eine Anwendung erfolgte für das variable Vorleitgitter bisher in kleineren Stückzahlen, was im Besonderen an der komplizierten und kostenungünstigen Bauweise der axialen Vorleitgitter liegt.

Der Erfindung liegt die Aufgabe zugrunde, einen Abgasturbolader derart auszubilden und anzuordnen, dass der Wirkungsgrad durch Verringerung der Spaltverluste erhöht und gleichzeitig die serienmäßige Fertigung konstruktiv und kostentechnisch vereinfacht wird.

Gelöst wird die Aufgabe erfindungsgemäß dadurch, daß der Einströmkanal des Verdichters in Strömungsrichtung vor den Verdichterradschaufeln von einem axialen Bereich in einen als radialer Ringkanal ausgebildeten radialen Bereich mündet und in radialer Richtung des Verdichterrades die Vorleitschaufelhöhe konstant und die Verdichterschaufelhöhe nicht konstant ist und in axialer Richtung des Verdichterrades der Querschnitt der Vorleitschaufel konstant ist.

Der Verdichter ist eingangs- und ausgangsseitig als reiner Radialverdichter ausgebildet, bei dem die Verdichterradschaufeln und die Vorleitschaufeln im Bereich des radialen Ringkanals angeordnet sind. Dadurch dass die Profilkontur der Vorleitschaufel in einfacher zweidimensionaler Geometrie ausgeführt ist, lassen sich die parallelen Stirnseiten der Vorleitschaufeln plan bearbeiten und somit auf sehr kostengünstige Weise geringe Spaltbreiten und Spaltverluste verwirklichen.

Die Profilkontur der Verdichterradschaufel ist ebenfalls als einfache zweidimensionale Geometrielinie darstellbar. Im Gegensatz zur Vorleitschaufelhöhe ist im Allgemeinen die Verdichterschaufelhöhe in radialer Richtung des Verdichterrades nicht konstant. Die Verdichterschaufelhöhe nimmt bevorzugt mit zunehmendem Radius ab.

Es ist vorteilhaft, daß innerhalb des radialen Ringkanals sowohl eine Drall- und/oder Drosseleinrichtung in Strömungsrichtung vor als auch eine Drall- und/oder Drosseleinrichtung nach den Verdichterradschaufeln vorgesehen ist. Die verstellbare Drall- und/oder Drosseleinrichtung vor den Verdichterradschaufeln ist als radiales Vorleitgitter und die verstellbare Drall- und/oder Drosseleinrichtung nach den Verdichterradschaufeln ist als radiales Diffusorgitter ausgebildet.

Hierdurch wird erreicht, daß der Verdichterkennfeldbereich Richtung Pumpgrenze und Stopfgrenze ausgeweitet werden kann, wie das insbesondere für die aufgeladenen Ottomotoren relevant ist.

Als weitere vorteilhafte Eigenschaft bringt die erfindungsgemäße variable Verdichtergeometrie mit sich, daß der gleiche Druckaufbau bei unterschiedlichen Drehzahlen des Abgasturboladers erfolgen kann, wenn durch ein radiales Vorleitgitter des Verdichterrades ein Mitdrall- wie auch Gegendrallbetrieb bewerkstelligt wird.

Besonders interessant für den Ottomotor wird die Funktion des variablen Vorleitgitters, wenn damit auch die Funktion der Drosselklappe übernommen wird. Bei niederen Lasten wird das Vorleitgitter den Verdichter durch eine extreme Mitdrallposition in die sogenannte "Turbinenbetriebsweise" bringen können, wodurch als einziger Verbraucher des Abgasturboladers die Lagerung übrig bleibt und damit sehr hohe Abgasturbolader-Drehzahlen bei niederen Lasten einstellbar sind. Hierdurch kann das Konzept des stationären Turboladers in weiten Kennfeldbereichen des Motors realisiert werden, der sich dadurch auszeichnet, daß praktisch kein Turboloch mehr vorhanden ist und unmittelbar beim Gasgeben die gewünschte Luftlieferung für den Momentenaufbau des Motors zur Verfügung gestellt wird.

Eine Möglichkeit ist gemäß einer Weiterbildung, daß alle oder einzelne Vorleitschaufeln des radialen Vorleitgitters um bis zu ±90° Grad um ihre Schwenkachse verdrehbar sind. Dadurch sind sie wahlweise in eine Mitdrallstellung, eine Gegendrallstellung oder in eine offene Stellung verdrehbar. Die offene Stellung liegt bei etwa 0° Grad. In jeder dieser beliebigen Stellungen sind sie feststellbar. Das radiale Vorleitgitter kann die Funktion einer Drosselklappe übernehmen und reduziert damit einen in den Einströmkanal des Verdichters einströmenden beliebigen Massestrom bis hin zum Leerlaufpunkt des Motors.

Durch die erfindungsgemäße Art der Regelung und Steigerung der Aufladegrade kann die Drehzahl des Abgasturboladers reduziert und der Raddurchmesser der Verdichterräder angehoben werden. Dadurch ist das bekannte Mixflow-Rad vorteilhafterweise entgegen einer langjährigen Praxis durch ein reines Radialrad auszutauschen. Es wird hinsichtlich des Bauraums möglich, das variable, radiale Vorleitgitter mit geringen Funktionsspalten der Verdichterradschaufeln in dem reinen radialen parallelwandigen Zulauf zum Verdichterrad anzuordnen.

Der Verstellmechanismus wird dann von der konstruktiven wie auch kostenmäßigen Seite stark begünstigt, wodurch die serienmäßige Entwicklung des Gesamtverdichters dadurch merklich vereinfacht ist.

Im Gegensatz zu Verdichtern ohne variable Leitgitter kann der Verdichter mit Variogitter auch von der Leistungsaufnahme her gewichtet werden, wenn das Vorleitgitter auf Gegendrall eingestellt wird. Hierdurch läßt sich die Überdrehzahlgefahr, wie sie im Motorbremsbetrieb bei hohen Motordrehzahlen am Nutzfahrzeug bei Abgasturboladern mit hohen Wirkungsgraden auftritt, beseitigen.

Ferner ist es vorteilhaft, daß die Profilkontur der Vorleitschaufel in einfacher zweidimensionaler Geometrie ausgeführt ist. In axialer Richtung des Verdichterrades weist die Vorleitschaufel einen konstanten Querschnitt auf. Die Vorleitschaufelhöhe ist in radialer Richtung des Verdichterrades konstant.

Die Profilkontur der Verdichterradschaufel ist ebenfalls als einfache zweidimensionale Geometrielinie darstellbar. Im Gegensatz zur Vorleitschaufelhöhe ist im Allgemeinen die Verdichterschaufelhöhe in radialer Richtung des Verdichterrades nicht konstant. Die Verdichterschaufelhöhe nimmt bevorzugt mit zunehmendem Radius ab.

Es besteht bei dieser einfachen Radgestaltung die Möglichkeit, daß die Verdichterradschaufeln an ihrer Außenkontur gegenüber dem Grundkörper des Verdichterrades einen gemeinsamen Deckring aufweisen. Dadurch wird zwischen jeweils zwei Verdichterradschaufeln in radialer Richtung ein Kanal gebildet. Der Deckring ist beispielsweise mittels einer Labyrinthdichtung gegenüber dem Gehäuse abgedichtet, um geringste Leckagen zu garantieren. Des Weiteren dient der Deckring zur Stabilisierung hinsichtlich einer Schwingungsanfälligkeit der Radbeschaufelung.

Gemäß einer bevorzugten Ausführungsform der erfindungsgemäßen Lösung ist im Gehäuse in Strömungsrichtung nach dem Verdichterrad ein radiales Diffusorgitter mit Diffusorschaufeln angeordnet. Die Diffusorschaufeln sind in einer einfachen Ausführungsform als unverstellbare Festgeometrie ausgebildet. In einer bevorzugten Ausführungsform eines erfindungsgemäßen Abgasturboladers ist vorgesehen, die Diffusorschaufeln ebenfalls verstellbar und feststellbar auszubilden.

Gemäß einer weiteren bevorzugten Ausführungsform der erfindungsgemäßen Lösung ist vorgesehen, daß die Abgasturbine in Strömungsrichtung vor dem Abgasturbinenrad ein unverstellbares oder verstellbares Turbinen-Leitgitter aufweist. Die einzelnen Schaufeln des Turbinen-Leitgitters lassen sich entsprechend der Vorleitschaufeln verstellen. Mit einem verstellbaren Turbinen-Leitgitter ist schließlich der gesamte Abgasturbolader volldynamisch regelbar.

Im Zusammenhang mit der erfindungsgemäßen Ausbildung und Anordnung ist es von Vorteil, daß der variable Abgasturbolader in ein Regel- und Steuersystem einer Brennkraftmaschine eingebracht ist, das eine Regel- und Steuereinheit aufweist. Die Regel- und Steuereinheit nimmt Istwertsignale von der Brennkraftmaschine und von mehreren Drucksensoren im Regel- und Steuersystem auf. Ferner sendet die Regel- und Steuereinheit Steuersignale an vorgesehene Steuereinrichtungen. Diese können beispielsweise Bestandteil des Turbinen-Leitgitters, des Abgasrückführungsventils, des radialen Diffusorgitters oder des radialen Vorleitgitters des Verdichters sein.

Die erfindungsgemäße Vorrichtung ermöglicht ein Verfahren zum Regeln der Drehzahl eines variablen Abgasturboladers. Der variable Abgasturbolader ist dabei Bestandteil einer Brennkraftmaschine mit Getriebe. In einem ersten Verfahren wird während einer Schaltphase ein regelbarer Gegendrall auf das Verdichterrad erzeugt, wodurch der Abgasturbolader zur Vermeidung von Pumpstößen abgebremst wird. Zusatzlich wird wird während einer Motorbremsphase mittels eines radialen Vorleitgitters die Verdichterleistungsabnahme durch Drosselung erhöht, wodurch die Drehzahl des Abgasturboladers regelbar begrenzt wird, und während einer stationären Phase ein regelbarer Mitdrall mit einer Druckabsenkung über dem Gesamtverdichter auf das Verdichterrad erzeugt, wodurch der Verdichter als Turbine arbeitet, was zu hohen Rotordrehzahlen führt.

Außerdem ist es vorteilhaft, daß für die vorstehend genannten Verfahren mittels eines in Strömungsrichtung hinter das Verdichterrad geschalteten, variablen, radialen Diffusorgitters und eines variablen Leitgitters der Turbine die Drehzahl des variablen Abgasturboladers abhängig von einem Ladedruck, einer Last und einer Motordrehzahl der Brennkraftmaschine geregelt wird.

Weitere Vorteile und Einzelheiten der Erfindung sind in den Patentansprüchen und in der Beschreibung erläutert und in den Figuren dargestellt. Es zeigt:
- Figur 1: einen Schnitt durch einen Verdichter
- Figur 2: eine Schnittansicht A-A' nach Figur 1 über den gesamten Umfang des Verdichters,
- Figur 3: eine schematische Anordnung eines Regel- und Steuersystems zur Regelung einer Brennkraftmaschine,
- Figur 4: ein Diagramm der Stellung S eines Variogitters in Grad [°] in Abhängigkeit des Ladedrucks P₂,
- Figur 5: ein Diagramm der Motorbremsleistung P_{B} in Abhängigkeit der Motordrehzahl n_{M},
- Figur 6: ein Diagramm der Drehzahl n_{ATL} eines Abgasturboladers und des Gegendralls G in Abhängigkeit der Motordrehzahl n_{M}.

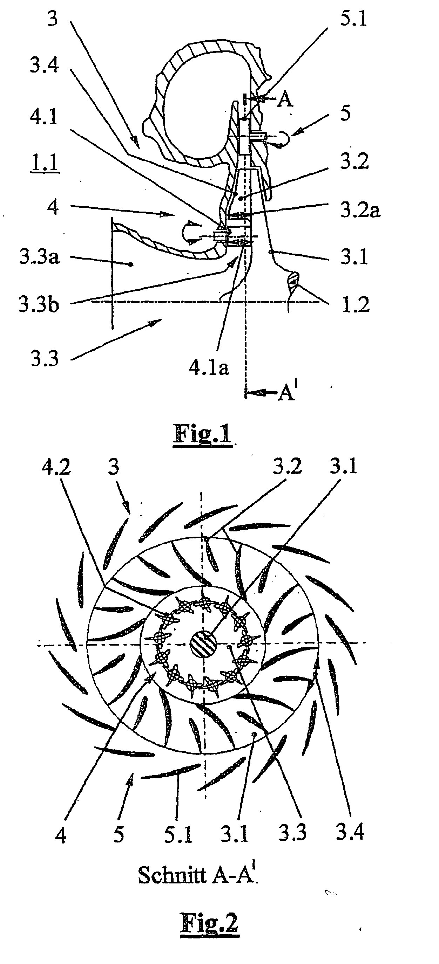

Die Figuren 1 und 2 zeigen den prinzipiellen Aufbau eines einfachen, variablen Radialverdichters 3, der in einem radialen Zulauf 3.3b ein erfindungsgemäßes, radial ausgerichtetes, variables Vorleitgitter 4 direkt vor einer Verdichterradbeschaufelung 3.2 aufweist. In Figur 2 ist gemäß einem Schnitt A-A' nach Figur 1 der gesamte Querschnitt des Radialverdichters 3 dargestellt.

Die Zuströmung in einen Einströmkanal 3.3 zum radialen Vorleitgitter 4 erfolgt durch einen freien, axialen Kanal 3.3a, der in den nachfolgenden, radialen Zulauf 3.3b mündet, in dem das radiale Vorleitgitter 4 vorgesehen ist.

Das betreffende radiale Vorleitgitter 4 ist in Figur 2 in zwei verschiedenen Stellungen 4.2 dargestellt: eine extreme Mitdrallstellung, in der das radiale Vorleitgitter 4 den radialen Zulauf 3.3b fast ganz schließt, und die nahezu vollständig offene Stellung. Würde man das Gitter aus der Mitdrallstellung über die offene Stellung weiterdrehen, kommt man in eine Gegendrallstellung. In der Gegendrallstellung wird die Strömungsumlenkung eines Verdichterrades 3.1 weiter gesteigert und die aerodynamische Belastung und die Druckerzeugung durch das Verdichterrad 3.1 verstärkt. Der Verstellwinkelbereich der Vorleitschaufeln 4.1 ist je nach Dicke der Vorleitschaufeln 4.1 von ca. -90°bis zu +90°. Dieser Verstellwinkelbereich hat eine große Variabilität zum Vorteil, von der fast geschlossenen Mitdrallposition im Motorleerlauf bei Ottomotoren bis zur größtmöglichen aerodynamischen Belastung des Verdichterrades 3.1 bei Nutzfahrzeug-Dieselmotoren im Motorbremsbetrieb. Dieser Verstellbereich ist durch eine konstante Vorleitschaufelhöhe 4.1a auf einfache Weise realisierbar.

Ein großer Kostenvorteil des Konzepts ist die Möglichkeit der zweidimensionalen Gestaltung der radialen Vorleitschaufel 4.1 und auch der Verdichterradschaufel 3.2. Die Verdichterradschaufel 3.2 des Verdichterrades 3.1 wird mittels der Kontur einer Verdichterschaufelhöhe 3.2a an die Durchsatz-Bedürfnisse auf einfache Weise angepaßt.

Zur Stabilisierung hinsichtlich einer Schwingungsanfälligkeit der Verdichterradschaufeln 3.2 ist vorgesehen, die Außenkontur der Verdichterradschaufeln 3.2 mit einem nicht dargestellten Deckring zu stabilisieren. Mittels des Deckrings können gegenüber einem Gehäuse 1.1 nicht dargestellte Abdichtmaßnahmen wie Labyrinthdichtungen vorgesehen werden, welche die Leckagen klein halten.

Das Verdichterrad 3.1 ist entsprechend der Figur 1 als bohrungsloses Verdichterrad 3.1 an der Stirnseite einer Welle 1.2 befestigt, was hinsichtlich der Festigkeitsbeanspruchung eine günstige Ausgangsbedingung zum Vorteil hat.

Zusätzlich zu dem erfindungsgemäßen radialen Vorleitgitter 4 ist direkt nach den Verdichterradschaufeln 3.2 ein variabel beschaufelter Diffusor bzw. ein Variodiffusor 5 mit drehbaren Diffusorschaufeln 5.1 vorgesehen, mit dem das Verhalten des Verdichters 3 nochmals bezüglich der Pump- und Stopfgrenzenlage verstärkt positiv beeinflußt wird.

In einer vereinfachten Ausführungsform wird der Verdichter 3 nur mit einem verstellbaren Element konzipiert, d. h. der beschaufelte oder unbeschaufelte, dem Verdichterrad 3.1 nachfolgende Diffusor 5 ist bei Vorhandensein eines variablen Vorleitgitters 4 als unverstellbare Festgeometrie ausgebildet.

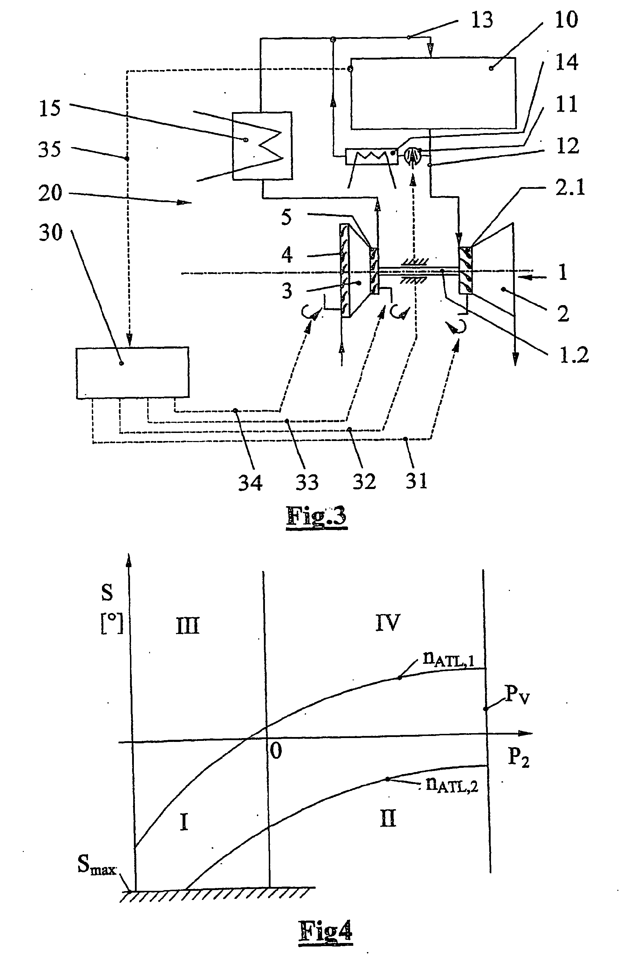

Die Einbindung der variablen Verdichtergeometrie in ein Regel- und Steuersystem 20 einer Brennkraftmaschine 10 zeigt die Figur 3. Eine Regel- und Steuereinheit 30 nimmt Istwertsignale 35 der Brennkraftmaschine 10 auf und gibt Steuersignale 33, 34 an einen Abgasturbolader 1 bzw. an das variable Vorleitgitter 4 und an den Variodiffusor 5 weiter.

Der variable Verdichter 3 ist mit einer Abgasturbine 2 mit einem variablem Turbinen-Leitgitter 2.1 gepaart, deren Stellung des Turbinen-Leitgitters 2.1 ebenfalls in Abhängigkeit zu einem Steuersignal 31 steht.

Die Ladungswechselzustandsgrößen, die vom Verhalten des Abgasturboladers 1 mitbestimmt werden, erfordern in der Betriebsweise der Abgasrückführung eine Überwachung eines Abgasrückführungsventils 11. Das Abgasrückführungsventil 11 wird ebenfalls von der Regel- und Steuereinheit 30 mit Steuersignalen 32 versorgt. Von besonderem Interesse sind als Ladungswechselzustandsgrößen die Drücke an einer Stelle I 12 und an einer Stelle II 13 der Brennkraftmaschine 10.

Das Abgasrückführungsventil 11 befindet sich in der gezeigten Anordnung vor einem Abgasrückführungskühler 14. Das Abgas wird zur Vermeidung der Verschmutzung nach einem Ladeluftkühler 15 der Verbrennungsluft nahe vor dem Eintritt in die Brennkraftmaschine 10 zugemischt.

In Figur 4 wird ein Prinzipdiagramm dargestellt, auf dem ein Ladedruck p₂ die Abszisse bildet und auf der Ordinate ein Drallzustand S, der durch das radiale Vorleitgitter 4 des Verdichters 3 bewirkt wird, aufgetragen ist. Der drallfreie Zustand der Anströmung des Verdichterrades 3.1 trennt die Mitdrall-Bereiche I und II von den Gegendrall-Bereichen III und IV.

An einem Ottomotor ist besonders der Bereich I von Interesse, in dem das Vorleitgitter 4 die Funktion einer Drosselklappe übernimmt und den Unterdruck mit einer hohen Mitdrallströmungsgeschwindigkeit bewirkt. Hier kann das Konzept des sogenannten "stationären Turboladers" maßgebend unterstützt werden, indem die Verluste an der Drosselklappe vermieden werden und hier vorteilhaft zur Energieumsetzung im Verdichter 3 als Antriebsenergie genutzt werden. Der Verdichter 3 arbeitet in diesem Feld praktisch als Turbine, um eine Abgasturbolader-Drehzahl n_{ATL, 2} möglichst hoch zu halten.

Das Vorleitgitter 4 wird im Leerlauf der Brennkraftmaschine 10 bis zu einem gewünschten Minimalquerschnitt Sₘₐₓ geschlossen.

Im oberen Lastbereich des Ottomotors wird das Feld II wirksam, in dem die Mitdrallintensität einmal vom Ladedruck p₂ und einer Abgasturbolader-Drehzahl n_{ATL} abhängt. Je höher die Abgasturbolader-Drehzahl n_{ATL} sein soll, um so mehr wird der Mitdrall bei gegebenem Soll-Ladedruck intensiviert.

Die Gegendrall-Bereiche III und IV sind am Ottomotor in einem niederen Motordrehzahlbereich n_{M} weniger nützlich, da hier die Pumpgrenze zu höheren Durchsätzen hin verschoben wird und eher Pumpgefahr bedeutet. Prinzipiell lassen sich diese Bereiche jedoch zum schnellen Abbremsen des Abgasturboladers 1 am Verdichter 3 nutzen, um der Pumpgefahr in der Schaltphase aus dem Wege zu gehen, wenn die Motordrehzahlen n_{M} sehr schnell abfallen.

Eine größere Bedeutung besitzt der Bereich IV für das Motorbremsen bei Nutzfahrzeug-Dieselmotoren bei höchsten Turbo-Bremsleistungen. Durch die Gegendrallbetriebsweise kann die Abgasturbolader-Drehzahl n_{ATL} unter eine Festigkeitsgrenzdrehzahl n_{ATL,1} der Verdichter- und Turbinenräder gedrückt werden, ohne auf Bremsleistungshöhe verzichten zu müssen.

In Richtung höherem Ladedruck P₂ sind die Felder II und IV durch eine Vollast P_{V} begrenzt.

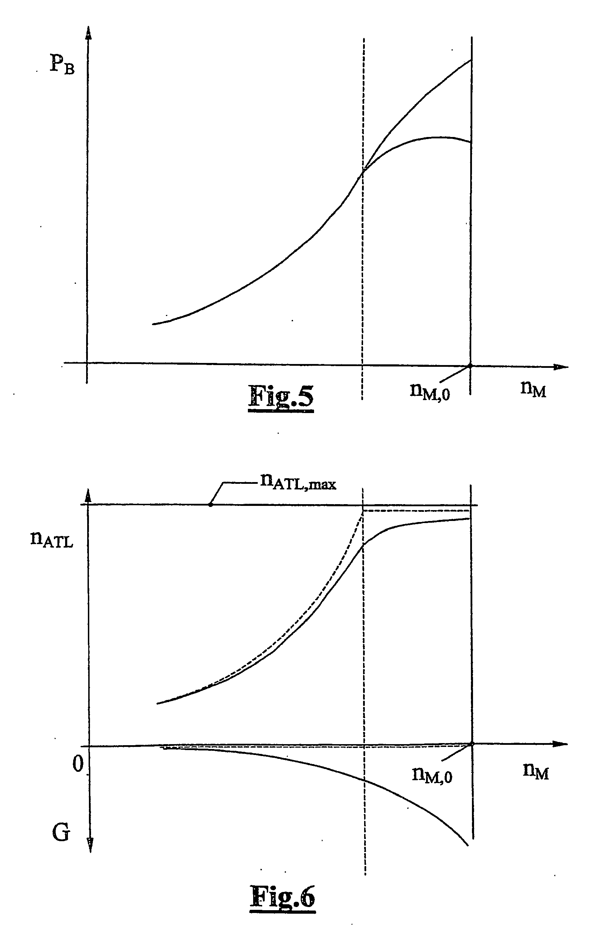

Anhand der Figuren 5 und 6 wird dies durch drei Parameter verdeutlicht, die in Abhängigkeit der Motordrehzahl n_{M} dargestellt sind. Die gestrichelten Linien stellen jeweils einen drallfreien Zustand, die durchgezogene Linie einen Zustand mit Gegendrall des Verdichters dar.

Gemäß Figur 5 ist eine Motorbremsleistung P_{B} über der Motordrehzahl n_{M} dargestellt. In Figur 6 ist nach oben die Drehzahl des Abgasturboladers n_{ATL} und nach unten das Maß eines Gegendralls G über die Motordrehzahl n_{M} dargestellt. Die Motordrehzahl n_{M} ist bei einer Betriebsdrehzahl n_{Mo} begrenzt.

Bei einer drallfreien Radzuströmung des Verdichters nach den gestrichelten Linien muß ab einer Drehzahlgrenze n_{ATL,}max des Abgasturboladers die maximale Motorbremsleistung P_{B} durch ein Öffnen des Variogitters 2.1 der Abgasturbine 2 beschränkt werden, um die Grenzdrehzahl des Abgasturboladers n_{ATL}, ₘₐₓ nicht zu überschreiten. Mit der Steigerung der aerodynamischen Belastung des Verdichterrades 3.1 kann mittels eines Gegendralls G entsprechend der durchgezogenen Linien die Motorbremsleistung P_{B} deutlich angehoben werden, ohne daß die Grenzdrehzahl des Abgasturboladers n_{ATL,max} überschritten wird. Hier macht die Spitzendruckbegrenzung in den Motorzylindern ab einem bestimmten Ladedruck die maßgebende Begrenzung aus.

### Bezugszeichenliste

- 1: Abgasturbolader
- 1.1: Gehäuse
- 1.2: Welle
- 2: Abgasturbine
- 2.1: Turbinen-Leitgitter
- 3: Verdichter, Radialverdichter
- 3.1: Verdichterrad
- 3.2: Verdichterradschaufeln
- 3.2a: Verdichterschaufelhöhe
- 3.3: Einströmkanal
- 3.3a: axialer Kanal
- 3.3b: radialer Ringkanal, radialer Zulauf
- 3.4: Verdichterradumfang
- 4: Drall- und/oder Drosseleinrichtung, radiales Vorleitgitter, Variogitter
- 4.1: Vorleitschaufeln
- 4.1a: Vorleitschaufelhöhe
- 4.2: Stellung
- 5: radiales Diffusorgitter, radialer Diffusor, Variodiffusor
- 5.1: Diffusorschaufeln
- 10: Brennkraftmaschine
- 11: Abgasrückführungsventil
- 12: Stelle I
- 13: Stelle II
- 14: Abgasrückführungskühler
- 15: Ladeluftkühler
- 20: Regel- und Steuersystem
- 30: Regel- und Steuereinheit
- 31: Steuersignale
- 32: Steuersignale
- 33: Steuersignale
- 34: Steuersignale
- 35: Istwertsignale
- G: Gegehdrall
- n_{ATL}: Drehzahl Abgasturbolader
- n_{ATL, max}: Drehzahlgrenze Abgasturbolader
- n_{ATL, 1}: gedrückte ATL-Drehzahl
- n_{ATL, 2}: hohe ATL-Drehzahl
- n_{M}: Motordrehzahl
- n_{Mo}: Betriebsdrehzahl
- P_{B}: Motorbremsleistung
- P_{V}: Vollast
- P₂: Ladedruck
- S: Stellung des Variogitters in Grad [°], Drallzustand
- Sₘₐₓ: Anschlagposition des Variogitters, Drosselstellung

## Patentansprüche

1. Variabler Abgasturbolader (1) für eine Brennkraftmaschine (10) mit einer Abgasturbine (2) und einem Verdichter (3) mit einer verstellbaren Drall-und/oder Drosseleinrichtung (4) mit einem Vorleitgitter (4) mit Vorleitschaufeln (4.1), wobei der Abgasturbolader (1) ein Gehäuse (1.1) und ein über eine Welle (1.2) mit einem Abgasturbinenrad verbundenes Verdichterrad (3.1) mit Verdichterradschaufeln (3.2) aufweist,
**dadurch gekennzeichnet, dass**
der Einströmkanal (3.3) des Verdichters (3) in Strömungs**richtung vor den Verdichterradschaufeln (3.2) von einem a**xialen Bereich in einen als radialer Ringkanal (3.3b) ausgebildeten radialen Bereich mündet und in radialer Richtung des Verdichterrades (3.1) die Vorleitschaufelhöhe (4.1a) konstant und die Verdichterschaufelhöhe (3.2a) nicht konstant ist und in axialer Richtung des Verdichterrades (3.1) der Querschnitt der Vorleitschaufel (4.1) konstant ist.

2. Vorrichtung nach Anspruch 1,
**dadurch gekennzeichnet, dass**
die Verdichterradschaufeln (3.2) im Bereich des radialen Ringkanals (3.3b) angeordnet sind und die Drall- und/oder Drosseleinrichtung (4) in Strömungsrichtung vor und/oder nach den Verdichterradschaufeln (3.2) vorgesehen sind, wobei als verstellbare Drall- und /oder Drosseleinrichtung (4) innerhalb des radialen Ringkanals (3.3b) ein radiales Vorleitgitter (4) und /oder ein radiales Diffusorgitter (5) vorgesehen ist.

3. Vorrichtung nach Anspruch 1 oder 2,
**dadurch gekennzeichnet, dass**
die Vorleitschaufeln (4.1) des radialen Vorleitgitters (4) in einem Bereich von -90°°Grad bis +90 °Grad wahlweise in eine Mitdrall-, eine Gegendrallstellung oder in eine offene Stellung verstellbar und in jeder dieser beliebigen Stellungen(4.2) feststellbar sind und die Vorleitschaufeln (4.1) in mindestens einer dieser Stellungen (4.2) einen in den Einströmkanal (3.3) des Verdichters (3) einströmenden beliebigen Massestrom bis zu dem Wert des Motorleerlaufpunktes reduzieren.

4. Vorrichtung nach einem der vorhergehenden Ansprüche,
**dadurch gekennzeichnet, dass**
alle Verdichterradschaufeln (3.2) an ihrer Außenkontur in axialer Richtung gegenüber dem Grundkörper des Verdichterrades (3.1) über den gesamten Verdichterradumfang (3.4) mindestens einen gemeinsamen Deckring aufweisen und der Deckring wahlweise mittels Abdichtvorrichtungen gegenüber dem Gehäuse (1.1) abgedichtet ist.

5. Vorrichtung nach einem der vorhergehenden Ansprüche,
**dadurch gekennzeichnet, dass**
im Gehäuse (1.1) in Strömungsrichtung nach dem Verdichterrad (3.1) ein radiales Diffusorgitter (5) mit Diffusorschaufeln (5.1) vorgesehen ist und die Diffusorschaufeln (5.1) unverstellbar oder verstellbar und feststellbar ausgebildet sind.

6. Vorrichtung nach einem der vorhergehenden Ansprüche,
**dadurch gekennzeichnet, dass**
die Abgasturbine (2) in Strömungsrichtung vor dem Abgasturbinenrad ein unverstellbares oder verstellbares Turbinen-Leitgitter (2.1) aufweist.

7. Vorrichtung nach einem der vorhergehenden Ansprüche,
**dadurch gekennzeichnet, dass**
der variable Abgasturbolader (1) in ein Regel- und Steuersystem (20) einer Brennkraftmaschine (10) eingebracht ist, das Regel- und Steuersystem (20) eine Regel- und Steuereinheit (30) aufweist, der Istwertsignale (35) von der Brennkraftmaschine (10) und von mehreren Drucksensoren im Regel- und Steuersystem (20) aufnimmt und die Regel- und Steuereinheit (30) wahlweise oder in Kombination Steuersignale (31, 32, 33, 34) an Steuereinrichtungen des Turbinen-Leitgitters (2.1), eines Abgasrückführungsventils (11), des radialen Diffusorgitters (5) oder des radialen Vorleitgitters (4) des Verdichters (3) sendet.

8. Verfahren zum Regeln der Drehzahl eines variablen Abgasturboladers (1) einer schaltbaren Brennkraftmaschine (10) mit eingangs- und ausgangsseitig radial arbeitenden Verdichter (3),
**dadurch gekennzeichnet, dass**
durch Einsatz eines verstellbaren, radialen Vorleitgitters (4) in Strömungsrichtung vor dem Verdichterrad (3.1)
a) während einer Schaltphase ein regelbarer Gegendrall auf das Verdichterrad (3.1) erzeugt wird, wodurch der Abgasturbolader (1) abgebremst wird und
b) während einer Motorbremsphase eine Gegendrallposition des Variogitters (4) im Einströmkanal (3.3) gebildet wird, wodurch die Drehzahl des Abgasturboladers (1) regelbar begrenzt wird und
c) während einer stationären Phase ein regelbarer Mitdrall mit einer Druckabsenkung über dem Gesamtverdichter auf das Verdichterrad (3.1) erzeugt wird, wodurch der Verdichter (3) als Turbine arbeitet.

9. Verfahren nach Anspruch 8,
**dadurch gekennzeichnet, dass**
mittels des verstellbaren, radialen Vorleitgitters (4) und des in Strömungsrichtung hinter das Verdichterrad (3.1) geschalteten, variablen, radialen Diffusorgitters (5) und des variablen Turbinen-Leitgitters (2.1) die Drehzahl des Abgasturboladers (1) abhängig von einem Ladedruck und/oder einer Last und/der einer Motordrehzahl der Brennkraftmaschine (10) geregelt wird.

## Claims

1. A variable exhaust-gas turbocharger (1) for an internal combustion engine (10) having an exhaust-gas turbine (2) and a compressor (3) with an adjustable swirl and/or throttle device (4) having an initial guide-blade row (4) with initial guide blades (4.1), the exhaust-gas turbocharger (1) having a housing (1.1) and a compressor wheel (3.1) with compressor wheel blades (3.2) which is connected to an exhaust-gas turbine wheel by a shaft (1.2),
**characterised in that**
upstream of the compressor wheel blades (3.2) in the direction of flow the inflow channel (3.3) of the compressor (3) makes a transition from an axial area into a radial area in the form of a radial ring channel (3.3b), and the initial guide blade height (4.1a) is constant whereas the compressor blade height (3.2a) is not constant radially in relation to the compressor wheel (3.1) and the cross-section of the initial guide blade (4.1) is constant axially in relation to the compressor wheel (3.1).

2. A device in accordance with claim 1,
**characterised in that**
the compressor wheel blades (3.2) are positioned in the area of the radial ring channel (3.3b) and the swirl and/or throttle device (4) is provided upstream and/or downstream of the compressor wheel blades (3.2) in the direction of flow, a radial initial guide-blade row (4) and/or a radial diffuser row (5) being provided inside the radial ring channel (3.3b) as an adjustable swirl and/or throttle device (4).

3. A device in accordance with claim 1 or 2,
**characterised in that**
the initial guide blades (4.1) of the radial initial guide-blade row (4) can be set within a range of -90° to +90° in a swirl position, a counter-swirl position or an open position and can be fixed in any one of these positions (4.2), and in at least one of these positions (4.2) the initial guide blades (4.1) reduce any mass flow entering the inflow channel (3.3) of the compressor (3) to the value of the engine idle point.

4. A device in accordance with one of the preceding claims,
**characterised in that**
all the compressor wheel blades (3.2) have on their outer contours positioned axially in relation to the basic body of the compressor wheel (3.1) and around the entire extent of the compressor (3.4) at least one common cover ring, and the cover ring may be sealed in relation to the housing (1.1) by means of sealing devices.

5. A device in accordance with one of the preceding claims,
**characterised in that**
provided in the housing (1.1) downstream of the compressor wheel (3.1) in the direction of flow is a radial diffuser row (5) with diffuser blades (5.1), and the diffuser blades (5.1) may be either non-adjustable or adjustable and fixable in design.

6. A device in accordance with one of the preceding claims,
**characterised in that**
the exhaust-gas turbine (2) has a non-adjustable or adjustable turbine guide-blade row (2.1) upstream of the exhaust-gas turbine wheel in the direction of flow.

7. A device in accordance with one of the preceding claims,
**characterised in that**
the variable exhaust-gas turbocharger (1) is integrated in an automatic control system (20) in an internal combustion engine (10), the automatic control system (20) has an automatic control unit (30) which receives actual value signals (35) from the internal combustion engine (10) and from various pressure sensors in the automatic control system (20) and the automatic control unit (30) emits control signals (31, 32, 33, 34) individually or in combination to control devices in the turbine guide-blade row (2.1), an exhaust-gas return valve (11), the radial diffuser row (5) or the radial initial guide-blade row (4) of the compressor (3).

8. A process for controlling the speed of a variable exhaust-gas turbocharger (1) in a switchable internal combustion engine (10) having a compressor (3) radially operating on the input and output side,
**characterised in that**
by using an adjustable, radial initial guide-blade row (4) upstream of the compressor wheel (3.1) in the direction of flow
a) a controllable counter swirl is generated towards the compressor wheel (3.1) during a switching phase, thereby braking the exhaust-gas turbocharger (1),
b) the variable geometry guide-blade row (4) assumes a counter swirl position in the inflow channel (3.3) during an engine braking phase, thereby limiting the speed of the exhaust-gas turbocharger (1) in a controllable manner,
c) a controllable swirl towards the compressor wheel (3.1) is generated with a drop in pressure over the entire compressor during a stationary phase, as a result of which the compressor (3) operates as a turbine.

9. A process in accordance with claim 8,
**characterised in that**
the speed of the exhaust-gas turbocharger (1) is controlled dependent on a boost pressure and/or a load and/or an engine speed of the internal combustion engine (10) by means of the adjustable radial initial guide-blade row (4), the variable, radial diffuser row (5) connected downstream of the compressor wheel (3.1) in the direction of flow and the variable turbine blade row (2.1).

## Revendications

1. Turbocompresseur de suralimentation (1) à géométrie variable pour un moteur à combustion interne (10), comportant une turbine à gaz d'échappement (2) et un compresseur (3) avec un dispositif de torsion et/ou d'étranglement (4) réglable comportant une grille directrice d'admission (4) avec des aubes directrices d'admission (4.1), le turbocompresseur de suralimentation (1) comportant un carter (1.1) et une roue de compresseur (3.1), qui comporte des aubes (3.2) et qui est reliée à une roue de la turbine à gaz d'échappement par l'intermédiaire d'un arbre (1.2),
**caractérisé en ce que** le canal d'admission (3.3) du compresseur (3) débouche, par référence à la direction d'écoulement, en amont des aubes (3.2) de la roue du compresseur depuis une zone axiale dans une zone radiale conçue sous forme de canal annulaire radial (3.3b) et la hauteur des aubes directrices d'admission (4.1a) est constante dans le sens radial de la roue de compresseur (3.1) et la hauteur des aubes (3.2a) de la roue du compresseur n'est pas constante dans le sens radial de la roue de compresseur (3.1) et la section des aubes directrices d'admission (4.1) est constante dans le sens axial de la roue de compresseur (3.1).

2. Dispositif selon la revendication 1, **caractérisé en ce que** les aubes (3.2) de la roue du compresseur sont disposées dans la zone du canal annulaire radial (3.3b) et le dispositif de torsion et/ou d'étranglement (4) sont prévus, par référence à la direction d'écoulement, en amont et/ou en aval des aubes (3.2) de la roue du compresseur, une grille directrice d'admission (4) radiale et/ou une grille de diffuseur (5) radiale étant prévues sous forme de dispositif de torsion et/ou d'étranglement (4) à l'intérieur du canal annulaire radial (3.3b).

3. Dispositif selon la revendication 1 ou 2,
**caractérisé en ce que** les aubes directrices d'admission (4.1) de la grille directrice d'admission (4) radiale sont réglables dans une plage de -90 degrés à +90 degrés au choix dans une position de torsion, une position de torsion inversée ou une position ouverte et peuvent être immobilisées dans chacune de ces positions (4.2) choisies et les aubes directrices d'admission (4.1), dans au moins une des ces positions (4.2), réduisent jusqu'à une valeur du point de ralenti du moteur un flux massique quelconque affluant dans le canal d'admission (3.3) du compresseur (3).

4. Dispositif selon l'une quelconque des revendications précédentes, **caractérisé en ce que** toutes les aubes (3.2) de la roue du compresseur, sur leur contour extérieur dans la direction axiale par rapport au corps de base de la roue de compresseur (3.1), comportent au moins une bague de recouvrement commune sur tout le pourtour de la roue de compresseur (3.4), et la bague de recouvrement est rendue étanche par rapport au carter (1.1) au choix au moyen de dispositifs d'étanchéité.

5. Dispositif selon l'une quelconque des revendications précédentes, **caractérisé en ce qu'**une grille de diffuseur (5) radiale avec des aubes de diffuseur (5.1) est prévue dans le carter (1.1) en aval de la roue de compresseur (3.1) par référence à la direction d'écoulement, et les aubes de diffuseur (5.1) ne sont pas réglables ou sont réglables et immobilisables.

6. Dispositif selon l'une quelconque des revendications précédentes, **caractérisé en ce que** la turbine à gaz d'échappement (2) comporte une grille directrice de turbine (2.1) non réglable ou réglable, montée en amont de la roue de turbine par référence à la direction d'écoulement.

7. Dispositif selon l'une quelconque des revendications précédentes, **caractérisé en ce que** le turbocompresseur de suralimentation (1) à géométrie variable est monté dans un système de réglage et de commande (20) d'un moteur à combustion interne (10), le système de réglage et de commande (20) comporte une unité de réglage et de commande (30), qui reçoit des signaux de valeur réelle (35) émanant du moteur à combustion interne (10) et de plusieurs capteurs de pression dans le système de réglage et de commande (20), et l'unité de réglage et de commande (30) émet, l'une ou l'autre ou en association, des signaux de commande (31, 32, 33, 34) vers des dispositifs de commande de la grille directrice (2.1) de la turbine, d'une soupape de reflux des gaz d'échappement (11), de la grille de diffuseur (5) radiale ou de la grille directrice d'admission (4) radiale du compresseur (3).

8. Procédé destiné à régler la vitesse de rotation d'un turbocompresseur de suralimentation (1) à géométrie variable d'un moteur à combustion interne (10) pouvant être commandé, comportant un compresseur (3) travaillant dans le sens radial en admission et en sortie,
**caractérisé en ce que**, par l'intermédiaire d'une grille directrice d'admission (4) radiale réglable, montée en amont de la roue de compresseur (3.1) par référence à la direction d'écoulement,
a) pendant une phase de changement de vitesse, une torsion inversée réglable est générée sur la roue de compresseur (3.1), moyennant quoi le turbocompresseur de suralimentation (1) est freiné,
b) pendant une phase de freinage du moteur, une position de torsion inversée de la grille variable (4) étant réalisée dans le canal d'admission (3.3), moyennant quoi la vitesse de rotation du turbocompresseur de suralimentation (1) est limitée de manière réglable, et
c) pendant une phase stationnaire, une torsion réglable est générée sur la roue de compresseur (3.1) avec une diminution de pression sur l'ensemble du compresseur (3), moyennant quoi le compresseur travaille en tant que turbine.

9. Procédé selon la revendication 8, **caractérisé en ce que** la vitesse de rotation du turbocompresseur de suralimentation (1) est réglée en fonction d'une pression de charge et/ou d'une charge et/ou d'une vitesse de rotation du moteur à combustion interne (10) au moyen de la grille directrice d'admission (4) radiale réglable et de la grille de diffuseur (5) radiale variable, montée en aval de la roue de compresseur (3.1) par référence à la direction d'écoulement, et de la grille directrice variable (2.1) de la turbine.
